(19) Europäisches Patentamt
European Patent Office
Office européen des brevets

(11) **EP 4 617 917 A1**

(12) **EUROPEAN PATENT APPLICATION**

(43) Date of publication:
**17.09.2025 Bulletin 2025/38**

(21) Application number: **25163377.2**

(22) Date of filing: **13.03.2025**

(51) International Patent Classification (IPC):
**G06F 17/11** (2006.01)    **G06N 10/00** (2022.01)

(52) Cooperative Patent Classification (CPC):
**G06F 17/11; G06N 10/00**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **14.03.2024 IN 202421018773**

(71) Applicant: **Tata Consultancy Services Limited Maharashtra (IN)**

(72) Inventors:
• **SALUNKE, Sushmitha Shankar Rao**
  **560066 Bangalore (IN)**
• **THINGBAIJAM, Rohit**
  **411057 Pune (IN)**

• **TRIPATHY, Saswati Soumya**
  **751024 Bhubaneswar (IN)**
• **RANA, Rahul**
  **700160 Kolkata (IN)**
• **SAHU, Aditya**
  **411057 Pune (IN)**
• **LOKHANDE, Smita Sanjay**
  **400093 Mumbai (IN)**
• **POOJARY, Sudhakara Deva**
  **400607 Thane (IN)**
• **BICHPURIYA, Yogesh Kumar**
  **411057 Pune (IN)**

(74) Representative: **Goddar, Heinz J. et al Boehmert & Boehmert Anwaltspartnerschaft mbB Pettenkoferstrasse 22 80336 München (DE)**

(54) **METHOD AND SYSTEM FOR OPTIMIZATION OF NON-CONVEX PROBLEMS USING QUANTUM SOLVERS**

(57)    Optimization problem aims to find a best optimal solution from feasible solutions The present disclosure provides optimization of non-convex problems using quantum solvers. Initially, the entire curve is considered as a single segment and the vertical distance of all points of the cure is determined. Then a point with maximum vertical distance is identified and the entire curve is segmented into two at this point. This step is repeated to get more such segments point until the maximum error distance in each segment falls below the threshold value. Now the objective function is broken down into its constituent parts, wherein each constituent part represents a separate segment. Each of these objective function segments are then assigned with a binary variable such that the binary variable allows to activate or deactivate the segments. Further, the objective function segments are fed to a quantum solver to get the optimal solution.

FIG. 1B

**Description**

CROSS-REFERENCE TO RELATED APPLICATIONS AND PRIORITY

The present application claims priority to Indian application no. 202421018773, filed on March 14, 2024.

TECHNICAL FIELD

The disclosure herein generally relates to the field of mixed-integer nonlinear optimization and, more particularly, to a method and system for optimization of non-convex problems using quantum solvers.

BACKGROUND

Optimization problem is the problem of finding the best optimal solution from all the feasible solutions. It can be divided into two categories, depending on whether the variables are continuous or discrete. However, some problems involves both discreate and continuous variables with several active non-linear equality and inequality constraints. These types of problems are categorised as non-convex mixed integer non-linear programming problems (MINLPs).

Traditional methods for solving MINLP problem like outer approximation algorithm (AOA) is unable to solve non-convex MINLP problem. Further techniques like Coati Optimization Algorithm (COA) were introduced where researchers had to first convert MINLP problem to NLP with all the integer variables relaxed as continuous variables between their bounds. Then to create the master MIP problem by removing all nonlinear constraints, build the objective function and define constraints. Finally, solved using classical solvers.

Another conventional method utilizes a predictive feedback controller is used to formulate a mixed-integer nonlinear programming (MINLP) problem. Here, a partial convexification technique is used to produce a convex approximation of the non-linear functions of the MINLP. This predictive controller is pre-configured with a set of instructions to perform partial convexification. This method requires a preconfigured set of instructions to perform partial convexification to produce a convex approximation. To define the set of instructions prior domain knowledge is required.

It has been observed that the conventional methods require more time and multiple experimentation to determine the number of segments for a given non-convex graph, which is a very tedious job. Further, immense experimentation time is required in the conventional approaches to get the optimal number of segments in a hit and trail method. Furthermore, the conventional methods need human intervention and hence are prone to human error.

SUMMARY

Embodiments of the present disclosure present technological improvements as solutions to one or more of the above-mentioned technical problems recognized by the inventors in conventional systems. For example, in one embodiment, a method for optimization of non-convex problems using quantum solvers is provided. The method includes receiving, via one or more hardware processors, a non-linear complex graph associated with a complex problem, wherein the non-linear complex graph is non-convex and mixed integer based and, wherein the non-linear complex graph comprises a plurality of graph points. Further, the method includes iteratively generating, via the one or more hardware processors, a plurality of graph segments based on the non-linear complex graph by: (i) computing a vertical distance associated with each of the plurality of graph points associated with a current non-linear complex graph segment, wherein the non-linear complex graph is initially assigned as the current non-linear complex graph segment (ii) identifying a seed graph point from among the plurality of graph points associated with the current non-linear complex graph segment by sorting the vertical distance associated with each of the plurality of graph points in descending order, wherein the graph point associated with the vertical distance in a top of a sorted vertical distance list is identified as the seed graph point (iii) dividing the current non-linear complex graph segment into two graph segments based on the identified seed point, wherein a first graph segment from among the two graph segments extends from the beginning of current non-linear complex graph segment to the identified seed graph point and the second graph segment from among the two graph segments extends from the identified seed graph point to the end of the current non-linear complex graph segment and (iv) updating the current non-linear complex graph segment with a graph segment from among the two graph segments with a maximum error distance less than a threshold value, wherein the two graph segments obtained in each iteration forms the plurality of graph segments. Furthermore, the method includes generating, via the one or more hardware processors, a plurality of objective function segments based on the overall objective function, wherein the overall objective function is divided into the plurality of objective functions equal to a number of the generated plurality of graph segments. Finally, the method includes generating, via the one or more hardware processors, a plurality of quantum solvable objective functions by assigning a binary variable for each of the plurality of objective function segments, wherein the binary variable is assigned such that the binary variable performs one of a) activating and b) deactivating the associated objective function segment based on a constraints equation.

In another aspect, a optimization of non-convex problems using quantum solvers is provided. The system includes at least one memory storing programmed instructions, one or more Input /Output (I/O) interfaces, and one or more hardware processors operatively coupled to the at least one memory, wherein the one or more hardware processors are configured by the programmed instructions to receive a non-linear complex graph associated with a complex problem, wherein the non-linear complex graph is non-convex and mixed integer based and, wherein the non-linear complex graph comprises a plurality of graph points. Further, the one or more hardware processors are configured by the programmed instructions to iteratively generate a plurality of graph segments based on the non-linear complex graph by: (i) computing a vertical distance associated with each of the plurality of graph points associated with a current non-linear complex graph segment, wherein the non-linear complex graph is initially assigned as the current non-linear complex graph segment (ii) identifying a seed graph point from among the plurality of graph points associated with the current non-linear complex graph segment by sorting the vertical distance associated with each of the plurality of graph points in descending order, wherein the graph point associated with the vertical distance in a top of a sorted vertical distance list is identified as the seed graph point (iii) dividing the current non-linear complex graph segment into two graph segments based on the identified seed point, wherein a first graph segment from among the two graph segments extends from the beginning of current non-linear complex graph segment to the identified seed graph point and the second graph segment from among the two graph segments extends from the identified seed graph point to the end of the current non-linear complex graph segment and (iv) updating the current non-linear complex graph segment with a graph segment from among the two graph segments with a maximum error distance less than a threshold value, wherein the two graph segments obtained in each iteration forms the plurality of graph segments. Furthermore, the one or more hardware processors are configured by the programmed instructions to generate a plurality of objective function segments based on the overall objective function, wherein the overall objective function is divided into the plurality of objective functions equal to a number of the generated plurality of graph segments. Finally, the one or more hardware processors are configured by the programmed instructions to generate a plurality of quantum solvable objective functions by assigning a binary variable for each of the plurality of objective function segments, wherein the binary variable is assigned such that the binary variable performs one of a) activating and b) deactivating the associated objective function segment based on a constraints equation.

In yet another aspect, a computer program product including a non-transitory computer-readable medium embodied therein a computer program for optimization of non-convex problems using quantum solvers is provided. The computer readable program, when executed on a computing device, causes the computing device to receive a non-linear complex graph associated with a complex problem, wherein the non-linear complex graph is non-convex and mixed integer based and, wherein the non-linear complex graph comprises a plurality of graph points. Further, the computer readable program, when executed on a computing device, causes the computing device to iteratively generate a plurality of graph segments based on the non-linear complex graph by: (i) computing a vertical distance associated with each of the plurality of graph points associated with a current non-linear complex graph segment, wherein the non-linear complex graph is initially assigned as the current non-linear complex graph segment (ii) identifying a seed graph point from among the plurality of graph points associated with the current non-linear complex graph segment by sorting the vertical distance associated with each of the plurality of graph points in descending order, wherein the graph point associated with the vertical distance in a top of a sorted vertical distance list is identified as the seed graph point (iii) dividing the current non-linear complex graph segment into two graph segments based on the identified seed point, wherein a first graph segment from among the two graph segments extends from the beginning of current non-linear complex graph segment to the identified seed graph point and the second graph segment from among the two graph segments extends from the identified seed graph point to the end of the current non-linear complex graph segment and (iv) updating the current non-linear complex graph segment with a graph segment from among the two graph segments with a maximum error distance less than a threshold value, wherein the two graph segments obtained in each iteration forms the plurality of graph segments. Furthermore, the computer readable program, when executed on a computing device, causes the computing device to generate a plurality of objective function segments based on the overall objective function, wherein the overall objective function is divided into the plurality of objective functions equal to a number of the generated plurality of graph segments. Finally, the computer readable program, when executed on a computing device, causes the computing device to generate a plurality of quantum solvable objective functions by assigning a binary variable for each of the plurality of objective function segments, wherein the binary variable is assigned such that the binary variable performs one of a) activating and b) deactivating the associated objective function segment based on a constraints equation.

It is to be understood that both the foregoing general description and the following detailed description are exemplary and explanatory only and are not restrictive of the invention, as claimed.

BRIEF DESCRIPTION OF THE DRAWINGS

The accompanying drawings, which are incorporated in and constitute a part of this disclosure, illustrate exemplary embodiments and, together with the description, serve to explain the disclosed principles:

FIG. 1A is a functional block diagram of a system for optimization of non-convex problems using quantum solvers, in accordance with some embodiments of the present disclosure.

FIG. 1B illustrates a modules of the system for optimization of non-convex problems using quantum solvers, in accordance with some embodiments of the present disclosure.

FIG. 2A and FIG. 2B (also referred to as FIG. 2) illustrate a flow diagram for a processor implemented method for optimization of non-convex problems using quantum solvers, in accordance with some embodiments of the present disclosure.

FIGS. 3A and 3B illustrates example non-convex graphs for explanatory purpose, in accordance with some embodiments of the present disclosure.

FIGS. 3C illustrates an example objective function, in accordance with some embodiments of the present disclosure.

FIG. 4 illustrates example linear segments generated from the non-convex objective function shown in FIG. 3C using the processor implemented method for optimization of non-convex problems using quantum solvers, in accordance with some embodiments of the present disclosure.

FIG. 5 is an example use case illustrating the application of the processor implemented method for optimization of non-convex problems using quantum solvers, in accordance with some embodiments of the present disclosure.

DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the spirit and scope of the disclosed embodiments.

To overcome the challenges of the conventional approaches, embodiments herein provide a method and system for optimization of non-convex problems using quantum solvers. In the present disclosure, the non-linear, non-convex graph is first divided into segments. Initially, the entire curve is considered as a single segment and the vertical distance of all the points in it is determined. Then a point with maximum vertical distance is identified. This refers to the point where the error between the curve and the line segment is the greatest within the segment. Further, the entire curve is segmented into two at this point. This step is repeated to get more such segments point until the maximum error distance in each segment falls below the threshold value. Now the objective function is broken down into its constituent parts, wherein each constituent part represents a separate segment. Each of these segments are then assigned with a binary variable such that the binary variable allows to activate or deactivate the segments based on certain conditions. Once all segments are assigned a binary variable, the segments are fed to a quantum solver to get the optimal solution.

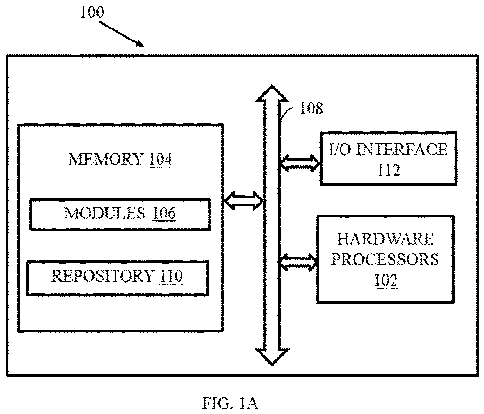

Referring now to the drawings, more particularly to FIG. 1A through FIG. 5, where similar reference characters denote corresponding features consistently throughout the figures, there are shown preferred embodiments, and these embodiments are described in the context of the following exemplary system and/or method.

FIG. 1A is a functional block diagram of a system 100 for optimization of non-convex problems using quantum solvers, in accordance with some embodiments of the present disclosure. The system 100 includes or is otherwise in communication with hardware processors 102, at least one memory such as a memory 104, an Input /Output (I/O) interface 112. The hardware processors 102, memory 104, and the I/O interface 112 may be coupled by a system bus such as a system bus 108 or a similar mechanism. In an embodiment, the hardware processors 102 can be one or more hardware processors.

The I/O interface 112 may include a variety of software and hardware interfaces, for example, a web interface, a graphical user interface, and the like. The I/O interface 112 may include a variety of software and hardware interfaces, for example, interfaces for peripheral device(s), such as a keyboard, a mouse, an external memory, a printer and the like. Further, the I/O interface 112 may enable the system 100 to communicate with other devices, such as web servers, and external databases.

The I/O interface 112 can facilitate multiple communications within a wide variety of networks and protocol types, including wired networks, for example, local area network (LAN), cable, etc., and wireless networks, such as Wireless LAN (WLAN), cellular, or satellite. For the purpose, the I/O interface 112 may include one or more ports for connecting several computing systems with one another or to another server computer. The I/O interface 112 may include one or more ports for connecting several devices to one another or to another server.

The one or more hardware processors 102 may be implemented as one or more microprocessors, microcomputers, microcontrollers, digital signal processors, central processing units, node machines, logic circuitries, and/or any devices that manipulate signals based on operational instructions. Among other capabilities, the one or more hardware processors 102 is configured to fetch and execute computer-readable instructions stored in memory 104.

The memory 104 may include any computer-readable medium known in the art including, for example, volatile memory, such as static random access memory (SRAM) and dynamic random access memory (DRAM), and/or non-volatile memory, such as read only memory (ROM), erasable programmable ROM, flash memories, hard disks, optical disks, and magnetic tapes. In an embodiment, memory 104 includes a plurality of modules 106. The memory 104 also includes a data repository (or repository) 110 for storing data processed, received, and generated by the plurality of modules 106.

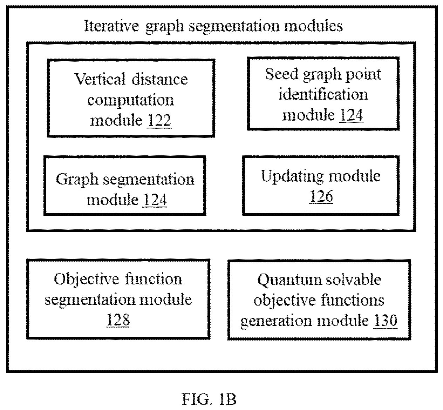

The plurality of modules 106 includes programs or coded instructions that supplement applications or functions performed by the system 100 for optimization of non-convex problems using quantum solvers. The plurality of modules 106, amongst other things, can include routines, programs, objects, components, and data structures, which perform particular tasks or implement particular abstract data types. The plurality of modules 106 may also be used as, signal processor(s), node machine(s), logic circuitries, and/or any other device or component that manipulates signals based on operational instructions. Further, the plurality of modules 106 can be used by hardware, by computer-readable instructions executed by the one or more hardware processors 102, or by a combination thereof. The plurality of modules 106 can include various sub-modules (not shown). The plurality of modules 106 may include computer-readable instructions that supplement applications or functions performed by the system 100 for optimization of non-convex problems using quantum solvers. For example, the plurality of modules includes a vertical distance computation module 120 (shown in FIG. 1B), a seed graph points identification module 122 (shown in FIG. 1B), a graph segmentation module 124 (shown in FIG. 1B), an updating module 126 (shown in FIG. 1B), an objective function segmentation module 128 (shown in FIG. 1B) and a quantum solvable objective functions generation module 130 (shown in FIG. 1B).

FIG. 1B illustrates a broad level functional modules for a processor implemented method for optimization of non-convex problems using quantum solvers, in accordance with some embodiments of the present disclosure.

The data repository (or repository) 110 may include a plurality of abstracted pieces of code for refinement and data that is processed, received, or generated as a result of the execution of the plurality of modules in the module(s) 106.

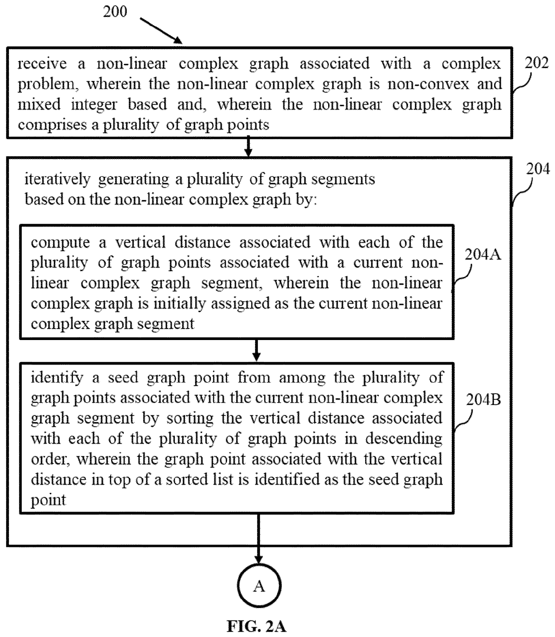

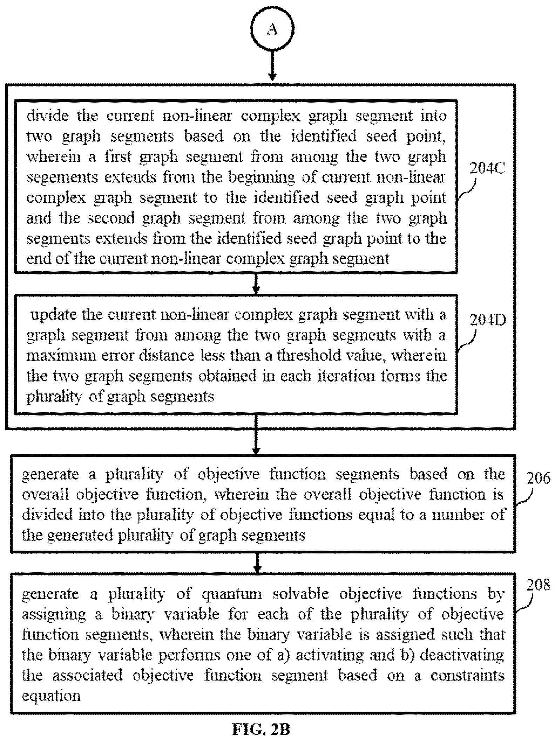

Although the data repository 110 is shown internal to the system 100, it will be noted that, in alternate embodiments, the data repository 110 can also be implemented external to the system 100, where the data repository 110 may be stored within a database (repository 110) communicatively coupled to the system 100. The data contained within such an external database may be periodically updated. For example, new data may be added into the database (not shown in FIG. 1A) and/or existing data may be modified and/or non-useful data may be deleted from the database. In one example, the data may be stored in an external system, such as a Lightweight Directory Access Protocol (LDAP) directory and a Relational Database Management System (RDBMS). The working of the components of the system 100 are explained with reference to the method steps depicted in FIG. 2.

FIG. 2 is an exemplary flow diagrams illustrating a method 200 for optimization of non-convex problems using quantum solvers implemented by the system of FIG. 1A and 1B, according to some embodiments of the present disclosure. In an embodiment, the system 100 includes one or more data storage devices or the memory 104 operatively coupled to the one or more hardware processor(s) 102 and is configured to store instructions for execution of steps of the method 200 by the one or more hardware processors 102. The steps of method 200 of the present disclosure will now be explained with reference to the components or blocks of system 100 as depicted in FIG. 1A and 1B and the steps of flow diagram as depicted in FIG. 2. The method 200 may be described in the general context of computer executable instructions. Generally, computer executable instructions can include routines, programs, objects, components, data structures, procedures, modules, functions, etc., that perform particular functions or implement particular abstract data types. The method 200 may also be practiced in a distributed computing environment where functions are performed by remote processing devices that are linked through a communication network. The order in which the method 200 is described is not intended to be construed as a limitation, and any number of the described method blocks can be combined in any order to implement the method 200, or an alternative method. Furthermore, the method 200 can be implemented in any suitable hardware, software, firmware, or combination thereof.

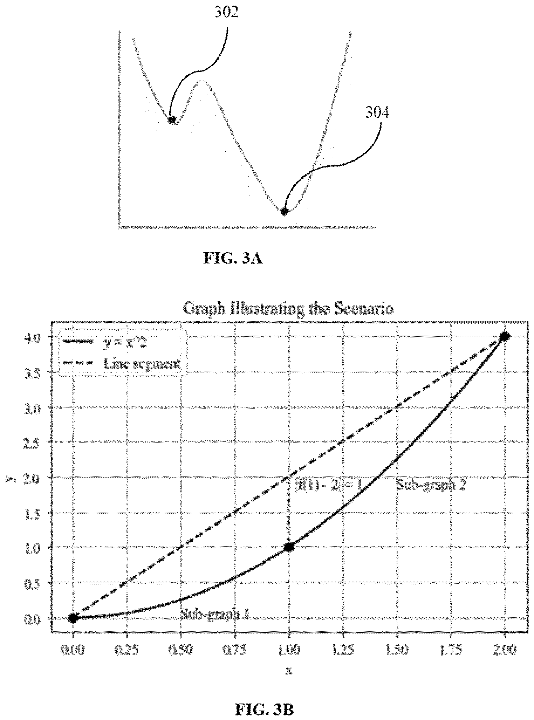

At step 202 of method 200, one or more hardware processors 102 are configured by the programmed instructions to receive a non-linear complex graph G associated with a complex problem which is defined by points $(x_i, f(x_i))$ wherein the non-linear complex graph is non-convex and mixed integer based and, wherein the non-linear complex graph comprises a plurality of graph points, for example, 302 and 304 as shown in FIG. 3A.

At step 204 of method 200, the one or more hardware processors 102 are configured by the programmed instructions to iteratively generate a plurality of graph segments based on the non-linear complex graph. The iterative process of step 204 is explained in conjunction with steps 204A through 204D. At step 204A, the vertical distance computation module 122, when executed by the one or more hardware processors 102 is configured by the programmed instructions to compute a vertical distance associated with each of the plurality of graph points associated with a current non-linear complex graph segment $(x_i, y_i)$ is computed. The non-linear complex graph is initially assigned as the current non-linear complex graph segment. The vertical distance is the error distance given by $|f(x_i), y_i|$.

At 204B, the seed graph point identification module 122, when executed by the one or more hardware processors 102 is configured by the programmed instructions to identify a seed graph point from among the plurality of graph points associated with the current non-linear complex graph segment by sorting the vertical distance associated with each of the plurality of graph points in descending order. The graph point associated with the vertical distance in the top of sorted list is identified as the seed graph point. The seed point is the point where an error between a curve and a corresponding linear segment is greatest within a segment and is represented by ($x_{max}$, $y_{max}$).

Further, after identifying the seed point, at step 204C, the graph segmentation module 120, when executed by the one or more hardware processors 102 is configured by the programmed instructions to segment the current non-linear complex graph segment into two graph segments based on the identified seed point. The first graph segment from among the two graph segments extends from the beginning of current non-linear complex graph segment to the identified seed graph point and the second graph segment from among the two graph segments extends from the identified seed graph point to the end of the current non-linear complex graph segment. For example, let's consider a simple example with a curve (y = x^2) and a line segment between points (0, 0) and (2, 4) shown in FIG. 3B. Now referring to FIG. 3B, at (x = 1), the curve (y = x^2) has a value of (y = 1), while the corresponding point on the line segment is (y = 2 ). The vertical distance at (x = 1) is (|f(1) - 2| = |1 - 2| = 1), representing the maximum error within this segment. Now the graph can be subdivided into the segment [0, 2] around (x = 1) to refine the approximation in that region, creating segments [0, 1] and [1, 2].

After dividing, at step 204D, the updation module 120, when executed by the one or more hardware processors 102 is configured by the programmed instructions to update the current non-linear complex graph segment with a graph segment identified from among the two graph segments with a maximum error distance less than a threshold value ($\varepsilon$). Wherein, $\varepsilon = |(y_{max} - y_{min}) \times 0.05|$, ($X_{max}$, $y_{max}$) and ($x_{min}$, $y_{min}$) are the points on the actual function at which the vertical distances between line segment and the actual function is maximum and minimum respectively.

Considering FIG. 3B, after the first iteration of adaptive segmentation process two sub-graphs are formed. The process of adaptive segmentation continues for the two sub-graphs in second iteration and continue for the next iteration until the threshold value ($\varepsilon$) is met.

The steps 204A through 204D is repeated until the maximum error distance associated with a current non-linear complex graph segment is less than the threshold value. The two graph segments obtained in each iteration forms the plurality of graph segments.

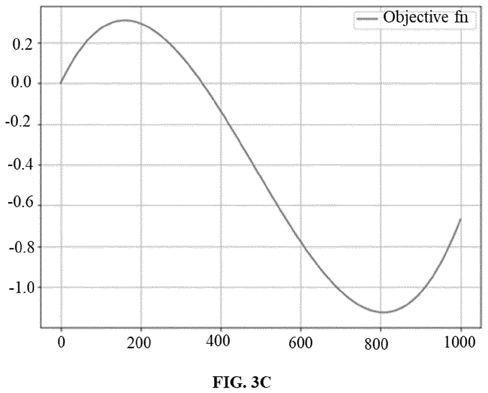

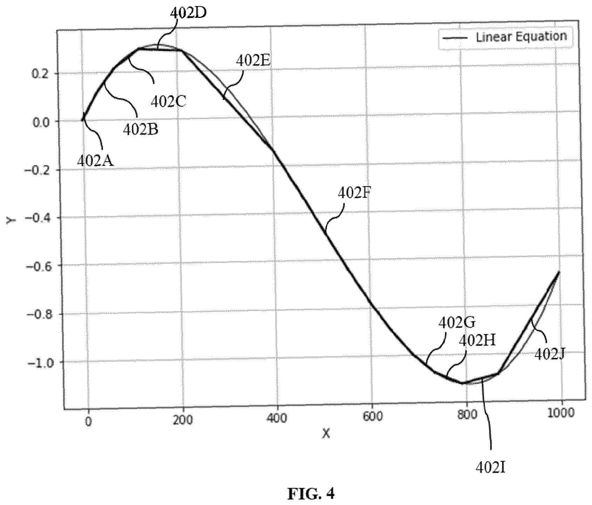

At step 206 of the method 200, the objective function segmentation module 122, when executed by the one or more hardware processors 102 is configured by the programmed instructions to generate a plurality of objective function segments based on the overall objective function. The overall objective function is divided into the plurality of objective functions equal to a number of the generated plurality of graph segments. An example objective function is shown in FIG. 3C and the segmented plurality of objective function of FIG. 3C is shown in FIG. 4. The objective function is a non-linear function which is unable to solve by the Quantum Hybrid Solver. Now referring to FIG. 4, segments 204A through 204J are some of the plurality of objective function segments.

At step 208 of the method 200, the quantum solvable objective function generation module 124 when executed by the one or more hardware processors 102 are configured by the programmed instructions to generate a plurality of quantum solvable objective functions by assigning a binary variable for each of the plurality of objective function segments, wherein the binary variable is assigned such that it performs one of a) activating and b) deactivating the corresponding objective function segment based on a constraints equation. The constraints equation ensures that only one binary variable associated with each of the plurality of objective segments is one and, wherein the binary variable with the value one is associated with a corresponding graph segment providing one of a) maximum value and b) a minimum value based on application requirement.

For example, let the non-convex, non-linear objective function: max $F(x)$. First, adaptive segmentation is applied on $F(x)$ to find the appropriate line-segments which linearly approximates $F(x)$. That is $F(x) \approx \sum_{i=1}^{K} L_i(x)$, where $K$ = number of line segments. Now, the objective function is defined as shown in equation (1).

$$\max_{x, b_i} \sum_{i=1}^{K} L_i(x) \times b_i \quad \dots\dots\dots\dots\dots\dots\dots\dots\dots\dots\dots\dots\dots\dots (1)$$

where, $b_i \in \begin{cases} 0, & \text{if line segment is not acticative} \\ 1, & \text{if line segment is activated} \end{cases}$ wherein, $L_i(x)$: the $i^{th}$ line segment, i = 1 to K Subject to:

$\sum_{i=1}^{K} b_i = 1$. The above constraint equation ensures that exactly one $b_i$ will be 1 and rest are 0. Since the problem is maximisation so solver selects when $b_i = 1$, whose corresponding line segment provide the maximum value. In the same way for every variable $x_i$ in the constraints, is associated with $b_i$.

The plurality of quantum solvable objective functions are fed into quantum solvers to obtain optimal results. For example, quantum annealing hardware is used for this approach where the objective is to find the lowest-energy state of a system corresponding to the optimal solution of a given optimization problem. This process involves mapping the problem onto a physical system. The objective function to be optimized is encoded as the energy landscape of the system. During the annealing process, the system starts in a high-energy state and gradually evolves towards lower-energy states, guided by the dynamics of quantum mechanics. As the system evolves, it explores different configurations, representing potential solutions to the optimization problem. The quantum fluctuations inherent in the system allow it to sample a multitude of potential solutions simultaneously. Through careful tuning of the annealing schedule and system parameters, the system can settle into a low-energy state corresponding to the optimal solution of the optimization problem. This optimal solution is then read out from the final state of the system.

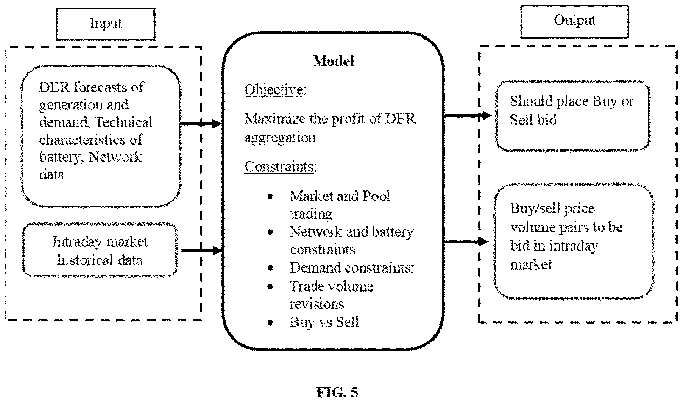

**Experimentation:** The present disclosure was experimented in a Distributed Energy Resources (DERs) environment shown in FIG. 5. DES utilizes solar, wind farms, electric cars, and energy storage systems. These distributed energy resources (DERs) are smaller than conventional centralized generators. Nevertheless, these DERs can add clean energy and offer useful services to the grid because of their abundance and flexibility. However, an unmanaged and disorganized integration of DERs may make it more difficult for grid operators to maintain grid stability. Aggregators are becoming more prominent in the electricity system under this framework. Coordination of DERs and revenue-generating services to the electricity grid through suitable markets are the objectives of an aggregator. Aggregators are supposed to supply the technology required in this configuration so that the DERs may communicate and be controlled. Aggregators increase the electricity system's economic efficiency by strengthening the stability of the current grid with minimal additional investment. They also generate private value at the same time by enabling their subscribers to profit from market participation. Because of the high transaction costs and limited individual capacities, it is economically inefficient for DERs to conduct individual market participation.

FIG. 5 illustrates the architecture of the use-case where the model is designed to determine the volumes and prices of buy and sell bids, such that the revenue earned by the aggregator is maximized and the demand requirements of the DERs in the aggregator's subscriber pool are met. The model takes 2D (2 Dimension) distribution of historical market data, Network and battery data, DER forecast of Generation and demand as input with below constraints and provides the price and volume estimation of buy/sell bids to trade in Market. The objective function of said use case is shown in FIG. 3C.

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

The embodiments of the present disclosure herein address the unresolved problem of optimization of non-convex problems using quantum solvers. The present disclosure targets problems that involve both discrete and continuous variables, along with multiple non-linear equality and inequality constraints. They are considered one of the most difficult optimization problems to solve because they are non-convex, meaning that the objective function is not guaranteed to have a single global minimum. The present disclosure solved the said problems by using adaptive segmentation method. Further, the present disclosure segments the objective function into smaller parts or "segments" using unsupervised techniques - meaning that there is no need worry about how many distinct pieces should be created and what should be the range of each segment beforehand.

It is to be understood that the scope of the protection is extended to such a program and in addition to a computer-readable means having a message therein such computer-readable storage means contain program-code means for implementation of one or more steps of the method when the program runs on a server or mobile device or any suitable programmable device. The hardware device can be any kind of device which can be programmed including e.g., any kind of computer like a server or a personal computer, or the like, or any combination thereof. The device may also include means which could be e.g., hardware means like e.g., an application-specific integrated circuit (ASIC), a field-programmable gate array (FPGA), or a combination of hardware and software means, e.g. an ASIC and an FPGA, or at least one microprocessor and at least one memory with software modules located therein. Thus, the means can include both hardware means, and software means. The method embodiments described herein could be implemented in hardware and software. The device may also include software means. Alternatively, the embodiments may be implemented on different hardware devices, e.g., using a plurality of CPUs, GPUs and edge computing devices.

The embodiments herein can comprise hardware and software elements. The embodiments that are implemented in software include but are not limited to, firmware, resident software, microcode, etc. The functions performed by various modules described herein may be implemented in other modules or combinations of other modules. For the purposes of this description, a computer-usable or computer readable medium can be any apparatus that can comprise, store, communicate, propagate, or transport the program for use by or in connection with the instruction execution system, apparatus, or device. The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope and spirit of the disclosed embodiments. Also, the words "comprising," "having," "containing," and "including," and other similar forms are intended to be equivalent in meaning and be open ended in that an item or items following any one of these words is not meant to be an exhaustive listing of such item or items or meant to be limited to only the listed item or items. It must also be noted that as used herein and in the appended claims, the singular forms "a," "an," and "the" include plural references unless the context clearly dictates otherwise. Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e. non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

## Claims

1. A processor-implemented method (200), the method comprising:

   receiving (202), via one or more hardware processors, a non-linear complex graph associated with a complex problem, wherein the non-linear complex graph is non-convex and mixed integer based and, wherein the non-linear complex graph comprises a plurality of graph points;
   iteratively generating (204), via the one or more hardware processors, a plurality of graph segments based on the non-linear complex graph by:

   computing (204A) a vertical distance associated with each of the plurality of graph points associated with a current non-linear complex graph segment, wherein the non-linear complex graph is initially assigned as the current non-linear complex graph segment;
   identifying (204B) a seed graph point from among the plurality of graph points associated with the current non-linear complex graph segment by sorting the vertical distance associated with each of the plurality of graph points in descending order, wherein the graph point associated with the vertical distance in top of a sorted vertical distance list is identified as the seed graph point;
   dividing (204C) the current non-linear complex graph segment into two graph segments based on the identified seed point, wherein a first graph segment from among the two graph segments extends from the beginning of current non-linear complex graph segment to the identified seed graph point and the second graph segment from among the two graph segments extends from the identified seed graph point to the end of the current non-linear complex graph segment; and
   updating (204D) the current non-linear complex graph segment with a graph segment from among the two graph segments with a maximum error distance less than a threshold value, wherein the two graph segments obtained in each iteration forms the plurality of graph segments;

   generating (206), via the one or more hardware processors, a plurality of objective function segments based on the overall objective function, wherein the overall objective function is divided into the plurality of objective functions equal to a number of the generated plurality of graph segments; and
   generating (208), via the one or more hardware processors, a plurality of quantum solvable objective functions by assigning a binary variable for each of the plurality of objective function segments, wherein the binary variable is assigned such that the binary variable performs one of a) activating and b) deactivating the associated objective function segment based on a constraints equation.

2. The method as claimed in claim 1, wherein the seed point is the point where an error between a curve and a corresponding linear segment is greatest within a segment.

3. The method as claimed in claim 1, wherein the constraints equation ensures that only one binary variable associated with each of the plurality of objective segments has value one and, wherein the binary variable with the value one is associated with an associated graph segment providing one of a) maximum value and b) a minimum value based on application requirement.

4. The method as claimed in claim 1, wherein the plurality of quantum solvable objective functions is fed into quantum solvers to obtain optimal result.

5. A system (100) comprising:

at least one memory (104) storing programmed instructions; one or more Input /Output (I/O) interfaces (112); and one or more hardware processors (102) operatively coupled to the at least one memory (104), wherein the one or more hardware processors (102) are configured by the programmed instructions to:
receive a non-linear complex graph associated with a complex problem, wherein the non-linear complex graph is non-convex and mixed integer based and, wherein the non-linear complex graph comprises a plurality of graph points;
iteratively generate a plurality of graph segments based on the non-linear complex graph by:

computing a vertical distance associated with each of the plurality of graph points associated with a current non-linear complex graph segment, wherein the non-linear complex graph is initially assigned as the current non-linear complex graph segment;
identifying a seed graph point from among the plurality of graph points associated with the current non-linear complex graph segment by sorting the vertical distance associated with each of the plurality of graph points in descending order, wherein the graph point associated with the vertical distance in a top of a sorted vertical distance list is identified as the seed graph point;
dividing the current non-linear complex graph segment into two graph segments based on the identified seed point, wherein a first graph segment from among the two graph segments extends from the beginning of current non-linear complex graph segment to the identified seed graph point and the second graph segment from among the two graph segments extends from the identified seed graph point to the end of the current non-linear complex graph segment; and
updating the current non-linear complex graph segment with a graph segment from among the two graph segments with a maximum error distance less than a threshold value, wherein the two graph segments obtained in each iteration forms the plurality of graph segments;

generating a plurality of objective function segments based on the overall objective function, wherein the overall objective function is divided into the plurality of objective functions equal to a number of the generated plurality of graph segments; and
generating a plurality of quantum solvable objective functions by assigning a binary variable for each of the plurality of objective function segments, wherein the binary variable is assigned such that the binary variable performs one of a) activating and b) deactivating the associated objective function segment based on a constraints equation.

6. The system as claimed in claim 5, wherein the seed point is the point where an error between a curve and a corresponding linear segment is greatest within a segment.

7. The system as claimed in claim 5, wherein the constraints equation ensures that only one binary variable associated with each of the plurality of objective segments has value one and, wherein the binary variable with the value one is associated with a associated graph segment providing one of a) maximum value and b) a minimum value based on application requirement.

8. The system as claimed in claim 5, wherein the plurality of quantum solvable objective functions is fed into quantum solvers to obtain optimal result.

9. One or more non-transitory machine-readable information storage mediums comprising one or more instructions which when executed by one or more hardware processors cause:

receiving a non-linear complex graph associated with a complex problem, wherein the non-linear complex graph is non-convex and mixed integer based and, wherein the non-linear complex graph comprises a plurality of graph points;
iteratively generating a plurality of graph segments based on the non-linear complex graph by:

computing a vertical distance associated with each of the plurality of graph points associated with a current non-linear complex graph segment, wherein the non-linear complex graph is initially assigned as the current non-linear complex graph segment;

identifying a seed graph point from among the plurality of graph points associated with the current non-linear complex graph segment by sorting the vertical distance associated with each of the plurality of graph points in descending order, wherein the graph point associated with the vertical distance in top of a sorted vertical distance list is identified as the seed graph point;

dividing the current non-linear complex graph segment into two graph segments based on the identified seed point, wherein a first graph segment from among the two graph segments extends from the beginning of current non-linear complex graph segment to the identified seed graph point and the second graph segment from among the two graph segments extends from the identified seed graph point to the end of the current non-linear complex graph segment; and

updating the current non-linear complex graph segment with a graph segment from among the two graph segments with a maximum error distance less than a threshold value, wherein the two graph segments obtained in each iteration forms the plurality of graph segments;

generating a plurality of objective function segments based on the overall objective function, wherein the overall objective function is divided into the plurality of objective functions equal to a number of the generated plurality of graph segments; and

generating a plurality of quantum solvable objective functions by assigning a binary variable for each of the plurality of objective function segments, wherein the binary variable is assigned such that the binary variable performs one of a) activating and b) deactivating the associated objective function segment based on a constraints equation.

10. The one or more non-transitory machine-readable information storage mediums as claimed in claim 9, wherein the seed point is the point where an error between a curve and a corresponding linear segment is greatest within a segment.

11. The one or more non-transitory machine-readable information storage mediums as claimed in claim 9, wherein the constraints equation ensures that only one binary variable associated with each of the plurality of objective segments has value one and, wherein the binary variable with the value one is associated with an associated graph segment providing one of a) maximum value and b) a minimum value based on application requirement.

12. The one or more non-transitory machine-readable information storage mediums as claimed in claim 9, wherein the plurality of quantum solvable objective functions is fed into quantum solvers to obtain optimal result.

100

108

MEMORY 104

MODULES 106

REPOSITORY 110

I/O INTERFACE
112

HARDWARE
PROCESSORS
102

FIG. 1A

Iterative graph segmentation modules

Vertical distance computation module 122

Seed graph point identification module 124

Graph segmentation module 124

Updating module 126

Objective function segmentation module 128

Quantum solvable objective functions generation module 130

FIG. 1B

200

| receive a non-linear complex graph associated with a complex problem, wherein the non-linear complex graph is non-convex and mixed integer based and, wherein the non-linear complex graph comprises a plurality of graph points | 202 |

204

iteratively generating a plurality of graph segments
based on the non-linear complex graph by:

| compute a vertical distance associated with each of the plurality of graph points associated with a current non-linear complex graph segment, wherein the non-linear complex graph is initially assigned as the current non-linear complex graph segment | 204A |

| identify a seed graph point from among the plurality of graph points associated with the current non-linear complex graph segment by sorting the vertical distance associated with each of the plurality of graph points in descending order, wherein the graph point associated with the vertical distance in top of a sorted list is identified as the seed graph point | 204B |

A

**FIG. 2A**

A

divide the current non-linear complex graph segment into two graph segments based on the identified seed point, wherein a first graph segment from among the two graph segments extends from the beginning of current non-linear complex graph segment to the identified seed graph point and the second graph segment from among the two graph segments extends from the identified seed graph point to the end of the current non-linear complex graph segment

204C

update the current non-linear complex graph segment with a graph segment from among the two graph segments with a maximum error distance less than a threshold value, wherein the two graph segments obtained in each iteration forms the plurality of graph segments

204D

generate a plurality of objective function segments based on the overall objective function, wherein the overall objective function is divided into the plurality of objective functions equal to a number of the generated plurality of graph segments

206

generate a plurality of quantum solvable objective functions by assigning a binary variable for each of the plurality of objective function segments, wherein the binary variable is assigned such that the binary variable performs one of a) activating and b) deactivating the associated objective function segment based on a constraints equation

208

**FIG. 2B**

302

304

**FIG. 3A**

Graph Illustrating the Scenario

**FIG. 3B**

FIG. 3C

FIG. 4

**FIG. 5**

Europäisches
Patentamt

European
Patent Office

Office européen
des brevets

# EUROPEAN SEARCH REPORT

**Application Number**

EP 25 16 3377

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DING TAO ET AL: "A Bi-Level Branch and Bound Method for Economic Dispatch With Disjoint Prohibited Zones Considering Network Losses", IEEE TRANSACTIONS ON POWER SYSTEMS, IEEE, USA, vol. 30, no. 6, 1 November 2015 (2015-11-01), pages 2841-2855, XP011665108, ISSN: 0885-8950, DOI: 10.1109/TPWRS.2014.2375322 [retrieved on 2015-08-03] * section III; figure 4 * | 1-12 | INV. G06F17/11 G06N10/00 |
| A | AKSHAY AJAGEKAR ET AL: "Quantum Computing based Hybrid Solution Strategies for Large-scale Discrete-Continuous Optimization Problems", ARXIV.ORG, CORNELL UNIVERSITY LIBRARY, 201 OLIN LIBRARY CORNELL UNIVERSITY ITHACA, NY 14853, 29 October 2019 (2019-10-29), XP081522351, * sections 4 and 5 * | 1-12 | |
| A | AJAGEKAR AKSHAY ET AL: "Hybrid Classical-Quantum Optimization Techniques for Solving Mixed-Integer Programming Problems in Production Scheduling", IEEE TRANSACTIONS ON QUANTUM ENGINEERING, IEEE, vol. 3, 28 June 2022 (2022-06-28), pages 1-16, XP011915203, DOI: 10.1109/TQE.2022.3187367 [retrieved on 2022-06-29] * sections III and IV * | 1-12 | |

**TECHNICAL FIELDS SEARCHED (IPC)**

G06F
G06N

-/--

The present search report has been drawn up for all claims

| Place of search | Date of completion of the search | Examiner |
|---|---|---|
| Berlin | 4 August 2025 | Virnik, Elena |

EPO FORM 1503 03.82 (P04C01)

page 1 of 2

Europäisches
Patentamt

European
Patent Office

Office européen
des brevets

# EUROPEAN SEARCH REPORT

**Application Number**

EP 25 16 3377

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | ELENA R HENDERSON ET AL: "Exploring Non-Linear Programming Formulations in QuantumCircuitOpt for Optimal Circuit Design", ARXIV.ORG, CORNELL UNIVERSITY LIBRARY, 201 OLIN LIBRARY CORNELL UNIVERSITY ITHACA, NY 14853, 27 October 2023 (2023-10-27), XP091646661, DOI: 10.1109/QCS56647.2022.00009 * sections III and IV * | 1-12 | |

----- 

**TECHNICAL FIELDS SEARCHED (IPC)**

The present search report has been drawn up for all claims

| Place of search | Date of completion of the search | Examiner |
|---|---|---|
| Berlin | 4 August 2025 | Virnik, Elena |

EPO FORM 1503 03.82 (P04C01)

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

**EP 4 617 917 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- IN 202421018773